# EUROPEAN PATENT APPLICATION

(11) **EP 4 679 205 A1**
(43) Date of publication of application: **14.01.2026**
(21) Application number: 23927565.4
(22) Date of filing: 12.10.2023
(51) Int. Cl.: G05B 19/042, G06F 9/46, H04Q 9/00

(54) **REMOTE CONTROL DEVICE AND CONTROL DEVICE**

(30) Priority: 10.03.2023 JP 2023037832
(71) Applicant: KABUSHIKI KAISHA TOSHIBA, Minato-ku Tokyo 105-0023 (JP)
(72) Inventor: MATSUYAMA Hiroki, Kawasaki-shi, Kanagawa 212-0013 (JP); OHNISHI Naoya, Kawasaki-shi, Kanagawa 212-0013 (JP); HIRANO Tatsuma, Kawasaki-shi, Kanagawa 212-0013 (JP)
(74) Representative: AWA Sweden AB
(86) International application number: PCT/JP2023/036955
(87) International publication number: WO 2024/189949

(57) **Abstract**

According to one embodiment, a remote control device includes a communication unit configured to receive shifting start notification regarding shifting of a control operation of a control target facility and reception values including data of a sensor of the control target facility and in-operation control information of the control operation from a control device that performs the control operation. Further, the remote control device includes a control program execution unit configured to execute a control program of the control operation based on the data of the sensor and the in-operation control information after the shifting start notification is received.

## Description

### [Technical Field]

Embodiments of the present invention relate to a remote control device and a control device.

### [Background Art]

A control device such as a PLC (Programmable Logic Controller) is installed in a factory or the like, and executes a control operation for operating a control target facility using data collected from a sensor or the like. In addition, a control program for periodically executing the control operation is stored in a control target device on the spot and all components such as the control device, the sensor, and control target equipment are managed on the spot.

In recent years, construction of a control system that executes a control operation performed by a control device in a remote control device remotely installed via a wideband network has been examined. In the control system, a control program is stored in the remote control device as well, and the control operation is executed in the remote control device. By constructing the system so as to enable remote execution of the control operation, resources are allocated to the remote control device to distribute loads and it is effective from a viewpoint of system redundancy.

### [Citation List]

### [Patent Literature]

[Patent Literature 1] Japanese Patent No. 5937637

### [Summary of Invention]

### [Technical Problem]

There has been technology of switching from a pre-update control program to a post-update control program inside the same control device. In the technology, the control device outputs a switching signal when switching the control program, and switches the control program after execution of a periodic program is completed.

However, in the technology, switchover of the control program between a control device on the spot and a remote control device is not taken into consideration. For example, if the switching signal does not arrive or if a control operation result of the remote control device cannot be received by the control device due to a communication failure of a wideband network, control of a control target facility may not be controlled in real time.

Therefore, the embodiments of the present invention provide a control device and a remote control device capable of keeping periodicity of a control operation and executing a control program.

### [Solution to Problem]

According to one embodiment, a remote control device includes a communication unit configured to receive shifting start notification regarding shifting of a control operation of a control target facility and reception values including data of a sensor of the control target facility and in-operation control information of the control operation from a control device that performs the control operation. Further, the remote control device includes a control program execution unit configured to execute a control program of the control operation based on the data of the sensor and the in-operation control information after the shifting start notification is received.

### [Brief Description of Drawings]

[Figure 1] Figure 1 is an example of an entire configuration of a control system in a first embodiment.
[Figure 2] Figure 2 is an example of each block diagram of the control system in the first embodiment.
[Figure 3] Figure 3 is each block diagram in another example of the control system in the first embodiment.
[Figure 4] Figure 4 is a diagram illustrating an example of a process sequence before a remote control device is started in the first embodiment.
[Figure 5] Figure 5 is a diagram illustrating an example of a process sequence when shifting control between the remote control device and a control device in the first embodiment.
[Figure 6] Figure 6 is a timing chart of a normal process sequence of the remote control device and the control device in the first embodiment.
[Figure 7] Figure 7 is a diagram illustrating an example of the normal process sequence between the remote control device and the control device in the first embodiment.
[Figure 8] Figure 8 is a diagram illustrating an example of the normal process sequence between the remote control device and the control device in a second embodiment.
[Figure 9] Figure 9 is a diagram illustrating an example of the process sequence when shifting the control between the remote control device and the control device in the second embodiment.
[Figure 10] Figure 10 is a diagram illustrating an example of the process sequence when shifting the control between the remote control device and the control device in a third embodiment.
[Figure 11] Figure 11 is a diagram illustrating an example of a process sequence when the control device starts storing a reception value in the third embodiment.
[Figure 12] Figure 12 is a diagram illustrating another example of the process sequence when shifting the control between the remote control device and the control device in the third embodiment.
[Figure 13] Figure 13 is a hardware configuration of the remote control device in a fourth embodiment.

### [Description of Embodiments]

Hereinafter, the embodiments of the present disclosure will be described with reference to the drawings. The present embodiments do not limit the present invention. The drawings are schematic or conceptual and ratios of parts or the like are not necessarily the same as real ones. In the description and the drawings, an element similar to the one described in advance regarding a previously presented drawing is denoted by the same sign and detailed description is appropriately omitted.

### (First Embodiment)

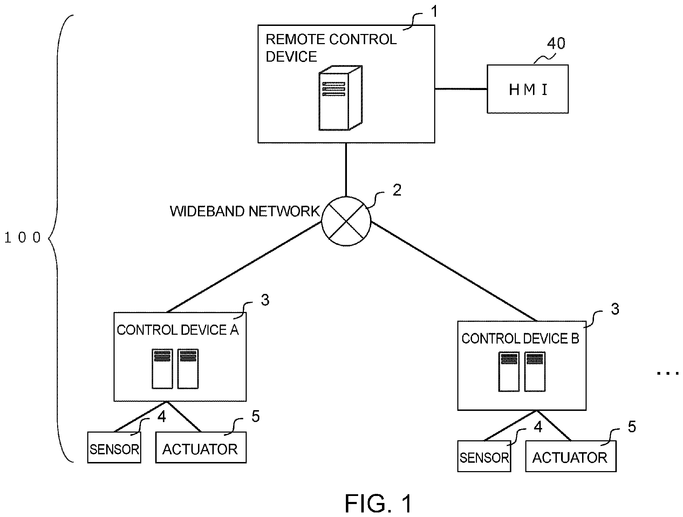

Figure 1 is an example of an entire configuration of a control system in the first embodiment.

A control system 100 includes a remote control device 1, a wideband network 2, a control device 3, a sensor 4, an actuator 5, and an HMI (Human Machine Interface) 40.

The remote control device 1 and the control device 3 are communicable via the wideband network 2.

The remote control device 1 is installed in a control station away from a factory, for example. Alternatively, the remote control device 1 may be installed on a cloud other than the control station. After the remote control device 1 is started, the remote control device 1 receives data of the sensor 4 via the wideband network 2 from the control device 3, and executes a control operation for controlling a control target facility (not illustrated). A result of the control operation is transmitted to the control device 3 via the wideband network 2.

The control device 3 is installed in a plant such as a factory, for example. The control device 3 executes the control operation within the device before the remote control device 1 is started, and generates a control signal that controls the actuator 5 based on the result. In addition, when the control operation is performed by the remote control device 1, the control device 3 generates the control signal that controls the actuator 5 based on the control operation result received from the remote control device 1. The actuator 5 is driven by the control signal to operate the control target facility.

The wideband network 2 is constructed by a wired line such as an optical line or a metal line, and a wireless line such as a 4G (4th Generation) line, a 5G (5th Generation) line, a multiplex wireless line, or a satellite line. Description of network facilities such as a router in networks 20 and 21 is omitted. The wideband network 2 may be constructed as a private line, or may be constructed using a public line such as the Internet. Further, the wideband network 2 may be configured not as a WAN (Wide Area Network) but as a LAN (Local Area Network).

In Figure 1, in the control system 100, a plurality of control devices 3 are connected to one remote control device 1 via the wideband network 2, and each control device 3 controls a different control target facility. In the present embodiment, description is given using an example in which two control devices 3 are connected. For the description, one of the two control devices 3 is a control device A and the other is a control device B. Further, to the control devices A and B, the sensor 4 and the actuator 5 are connected, respectively.

A user of the control system 100 monitors states of the remote control device 1 and the control device 3 via the HMI 40. A user program for operating these devices can be downloaded through the HMI 40. While this figure illustrates an example in which the HMI 40 is connected to the remote control device 1 to unitarily monitor the control system 100, the HMI 40 may be connected to the control device 3.

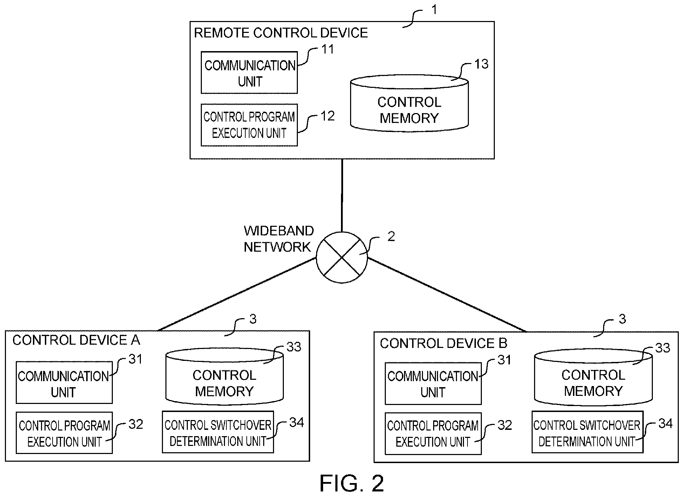

Figure 2 is an example of each block diagram of the control system in the first embodiment.

In Figure 2, the block diagrams of the remote control device 1 and the control devices A and B will be described. Further, since the control devices A and B have the same block diagrams, they are described as the control device 3.

The remote control device 1 includes a communication unit 11, a control program execution unit 12, and a control memory 13. In addition, the remote control device 1 can be realized by installing a program for the remote control device 1 to a PC (Personal Computer) for example. By a CPU (Central Processing Unit) inside the remote control device 1 executing the program of the remote control device 1, functions of the communication unit 11, the control program execution unit 12, and the control memory 13 are realized. The control memory 13 is constructed on a RAM (Random Access Memory), for example. Further, the remote control device 1 may be mounted on a PC as a VM (Virtual Machine).

The communication unit 11 communicates with a communication unit 31 of the control device 3 to be described later via the wideband network 2, after the remote control device 1 is started. Transmission of the control operation result to the control device 3 and reception of the data of the sensor 4 from the control device 3 are performed via the communication unit 11.

The control program execution unit 12 executes the control operation for controlling the control target facility.

The control memory 13 stores the data of the sensor 4, the control operation result, and in-operation control information. The control program execution unit 12 reads the data of the sensor 4 stored in the control memory 13, and executes the control operation.

The control operation result calculated by the control program execution unit 12 is stored in the control memory 13, and is transmitted to the control device 3 via the communication unit 11.

The in-operation control information is, for example, a value of a variable used in the control operation. The in-operation control information is, more specifically, the number of times that the data of the sensor 4 or the control operation result calculated in the past exceeds a threshold, or a value used in the past control operation or the like, and halfway information required for outputting the control operation result is relevant. Hereinafter, the in-operation control information is simply referred to as control information as well.

The control device 3 includes the communication unit 31, a control program execution unit 32, a control memory 33, and a control switchover determination unit 34. In addition, the control device 3 can be realized by installing a program for the control device 3 to a PC (Personal Computer) for example. By a CPU (Central Processing Unit) inside the control device 3 executing the program of the control device 3, functions of the communication unit 31, the control program execution unit 32, the control memory 33, and the control switchover determination unit 34 are realized. The control memory 13 is constructed on a RAM (Random Access Memory) such as a memory, for example. Further, the control device 3 may be mounted as a PLC.

The communication unit 31 communicates with the communication unit 11 via the wideband network 2, after the remote control device 1 is started. The data of the sensor 4 to be transmitted to the remote control device 1 and the control operation result to be received from the remote control device 1 are transmitted and received via the communication unit 31.

The control program execution unit 32 executes the control operation for controlling the control target facility in the control program execution unit 32 before the remote control device 1 is started.

The control memory 33 stores the control operation result calculated by the control device 3 and the in-operation control information, in addition to the data of the sensor 4, before the remote control device 1 is started.

Further, the control memory 33 receives and stores the control operation result calculated by the remote control device 1 and the in-operation control information, in addition to the data of the sensor 4, after the remote control device 1 is started.

When the control operation is executed in the control device 3, the control program execution unit 32 reads the data of the sensor 4 stored in the control memory 33 as an input value, and executes the control operation.

In addition, when the control operation is executed in the control device 3, the control operation result is stored in the control memory 33, and is then transmitted to the actuator 5 as a control signal by the communication unit 31.

The control switchover determination unit 34 determines switchover of the control operation as the remote control device 1 is started. For example, when it is determined to switch the control operation from the control device 3 to the remote control device 1 by the control switchover determination unit 34, the control operation is executed in the control program execution unit 12 of the remote control device 1 after a switchover process.

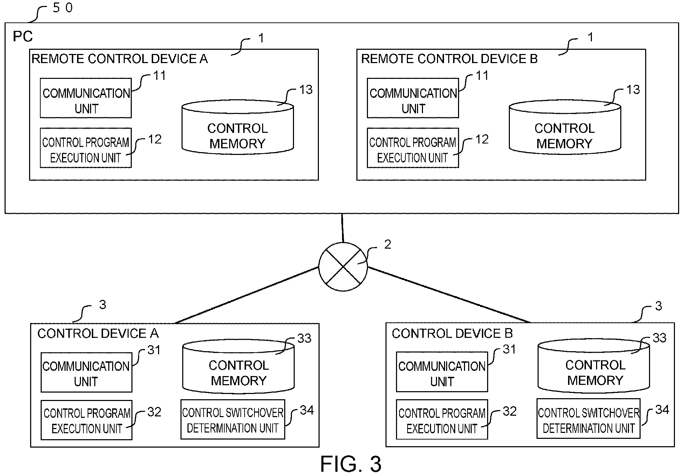

Figure 3 is each block diagram in another example of the control system in the first embodiment.

Figure 3 is an example in which a plurality of virtual remote control devices 1 are operated in one physical PC 50. In this example, two virtual remote control devices 1 share resources such as a CPU and a memory of one physical PC 50. In this example, the remote control device 1 that executes the control operation of the control device A is referred to as a remote control device A, and the remote control device 1 that executes the control operation of the control device B is referred to as a remote control device B. In this way, the remote control device 1 may be mounted as an individual VM that operates each control device 3. In addition, data of a variable or the like handled by each device of the control system 100 may be stored in a ring buffer for example and shared among the devices. Thus, the control system 100 can suppress increase in a memory using amount in each device. Hereinafter, in order to describe a switchover operation from the control device 3 to the remote control device 1, switchover between one remote control device 1 and one control device 3 will be described.

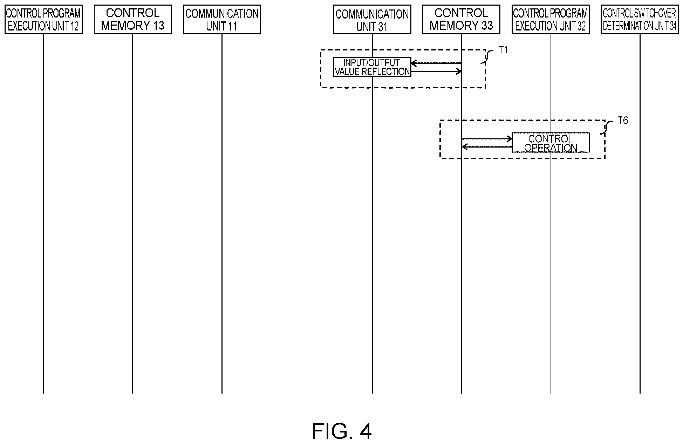

Figure 4 is a diagram illustrating an example of a process sequence before the remote control device is started in the first embodiment.

Figure 4 illustrates the process sequence in a state before the remote control device 1 is started, for example. Before the remote control device 1 is started, the control operation is executed by the control device 3 on the spot. Before the remote control device 1 is started, processes T1 and T6 are respectively independently executed in this order. Further, T1 and T6 are periodically executed by a T1 periodic timer and a T6 periodic timer.

T1 is a communication process between the control device 3 and the sensor 4 and the actuator 5. The communication unit 31 receives the data of the sensor 4, and stores it in the control memory 33 as the input value. In addition, the communication unit 31 reads the control operation result from the control memory 33 as an output value to the actuator 5, and transmits it to the actuator 5.

T6 is a process of executing a control program in the control device 3. Specifically, the control program execution unit 32 reads the data of the sensor 4 from the control memory 33, and executes the control operation. In addition, the control program execution unit 32 stores the in-operation control information in the control memory 33, in addition to the control operation result.

The control program execution unit 32 in the present embodiment stores the in-operation control information calculated by the control device 3 so that the control operation can be executed in the remote control device 1 after the remote control device 1 is started.

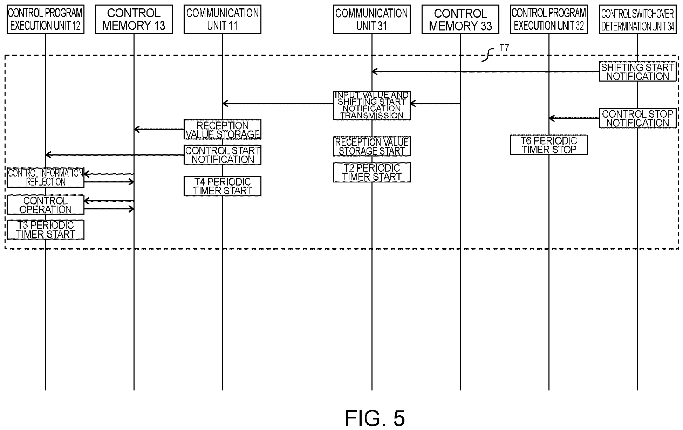

Figure 5 is a diagram illustrating an example of a process sequence when shifting the control between the remote control device and the control device in the first embodiment.

Here, an example of a process T7 of shifting a control program executing location from the control device 3 to the remote control device 1 without stopping the control operation that has been executed in the control device 3 after the remote control device 1 is started will be described.

In the meantime, the remote control device 1 and the control device 3 perform periodic communication. The control device 3 confirms start of the remote control device 1 by confirming mutual communication between the devices by the periodic communication. Further, for a communication failure of the wideband network 2 connecting the devices with each other as well, each device confirms restoration when the communication is confirmed by the periodic communication. The periodic communication of the devices with each other may be executed by a general communication confirmation method such as PING (Packet InterNet Groper).

In T7, the control switchover determination unit 34 first performs shifting start notification for shifting the control operation to the communication unit 31, and performs control stop notification for stopping the control operation to the control program execution unit 32. The communication unit 31 which has received the shifting start notification executes transmission of the input value and the shifting start notification, reception value storage start and T2 periodic timer start.

In the input value and shifting start transmission, the communication unit 31 reads the data of the sensor 4 and the in-operation control information in the control memory 33 as the input values and transmits them to the communication unit 11. In addition, the communication unit 31 transmits the shifting start notification together when transmitting the input values. The shifting start notification may be transmitted as transmission data different from the input values, or may be transmitted as the same transmission data by imparting it as an identification header for example in the transmission data of the input values.

In the reception value storage start, the communication unit 31 starts a process of receiving the control operation result and the in-operation control information and storing the data in the control memory 33 as reception values after the remote control device 1 starts the control operation.

In the T2 periodic timer start, the control device 3 starts a T2 periodic timer in order to start a process T2 of periodically transmitting contents of the control memory 33 from the control device 3 to the remote control device 1. Details of the process T2 will be described later.

The control program execution unit 32 which has received the control stop notification stops the T6 periodic timer in order to prevent confusion between the control operation result received from the remote control device 1 and the result of the control operation executed in the control program execution unit 32.

The communication unit 11 of the remote control device 1 which has received the input values and the shifting start notification from the control device 3 performs the reception value storage, control start notification, and T4 periodic timer start.

In the reception value storage, the communication unit 11 stores the data of the sensor 4 and the in-operation control information received from the communication unit 31 in the control memory 13 as the reception values. In the control start notification, the communication unit 11 performs the control start notification for starting the control operation to the control program execution unit 12. In the T4 periodic timer start, the control device 3 starts a T4 periodic timer in order to start a process T4 of periodically repeating transmission to the control device 3. Details of the process T4 will be described later.

In addition, the control program execution unit 12 which has received the control start notification performs control information reflection, the control operation, and T3 periodic timer start.

In the control information reflection, the control program execution unit 12 reads the in-operation control information from the control memory 13, and reflects it as program internal information. In the control operation, the control program execution unit 12 reads the data of the sensor 4 from the control memory 13, executes the control operation using the data, and stores the result in the control memory 13. In the T3 periodic timer start, the control device 3 starts a T3 periodic timer that periodically executes the control operation in the remote control device 1. Details of a process T3 will be described later.

By the process sequence described above, a state where T1 and T6 are executed is shifted to a state where T1 to T4 are respectively independently executed in this order by T7. Further, T1 to T4 are periodically executed by the T1 to T4 periodic timers, respectively.

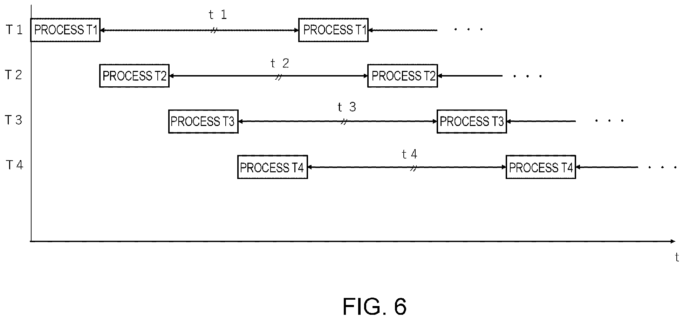

Figure 6 is a timing chart of a normal process sequence of the remote control device and the control device in the first embodiment.

Normally, the process sequence is executed by periodically repeating T1 to T4 in this order, and a remote control operation is realized. In addition, in the present embodiment, a time interval from execution of T1 to T4 to the execution of the processes T1 to T4 again in the next period is referred to as a periodic time. In Figure 6, the periodic times of the processes T1 to T4 are expressed by t1 to t4, respectively. In addition, in this example, since the processes T1 to T4 are executed in the order in every period, t1 to t4 are set as the same value. Further, for the periodic times, execution start time is managed by periodic timers T1 to T4.

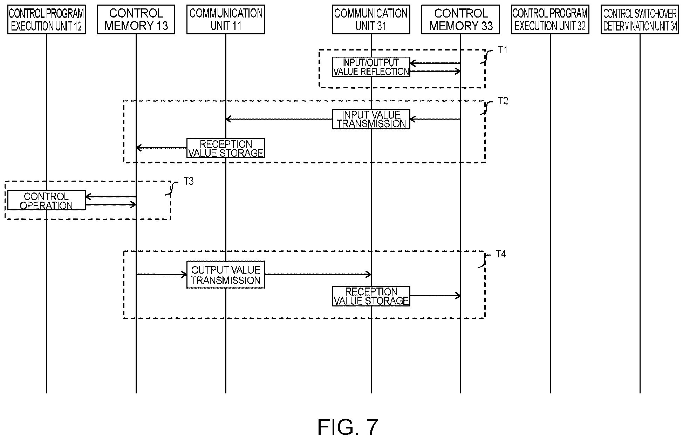

Figure 7 is a diagram illustrating an example of the normal process sequence between the remote control device and the control device in the first embodiment.

Since T1 is a process similar to the one described above, description is omitted. T2 is a process of transmitting the contents of the control memory 33 of the control device 3 to the remote control device 1. The communication unit 31 of the control device 3 reads the data of the sensor 4 as the input value from the control memory 33 and transmits it to the remote control device 1. In addition, the communication unit 11 of the remote control device 1 which has received the data of the sensor 4 stores the value in the control memory 13 as the reception value. In T2, since the control device 3 is not performing the control operation, the communication unit 31 of the control device 3 does not transmit the in-operation control information to the remote control device 1. Therefore, in T2, the in-operation control information is not included in the reception value of the communication unit 11 of the remote control device 1.

T3 is a process of executing the control program in the remote control device 1. The control program execution unit 12 reads the data of the sensor 4 from the control memory 13, and executes the control operation. The remote control device 1 stores the result of the executed control operation and the in-operation control information in the control memory 13.

T4 is a process for transmitting the data stored in the control memory 13 of the remote control device 1 to the control device 3. The communication unit 11 of the remote control device 1 reads the control operation result and the in-operation control information from the control memory 13 and transmits them to the control device 3 as the output values. The communication unit 31 of the control device 3 receives the control operation result and the in-operation control information and stores the values in the control memory 33 as the reception values.

Further, in a case where the control operation is being performed in the control device 3 due to occurrence of the communication failure of the wideband network 2, the control system 100 can shift the control program executing location by the similar process sequence when executing the control operation in the remote control device 1 after communication failure restoration.

According to the present embodiment, the control system 100 can shift from the state where T1 and T6 are executed, that is, the state where the control operation is executed by the control device 3, to the state where T1 to T4 are executed, that is, the state where the control operation is executed by the remote control device 1. Thus, the control system 100 can shift the control program executing location from the control device 3 on the spot to the remote control device 1.

Further, according to the present embodiment, the control device 3 stores the in-operation control information in the control memory 33 and transmits it to the remote control device 1 via the communication unit 31. In addition, the remote control device 1 receives the value from the control device 3 and stores it in the control memory 13. By reading the value when starting the execution of the control program, the remote control device 1 can reflect past data on the control operation. Thus, when the communication with the control device 3 is confirmed or when the control operation is remotely executed after the restoration of the communication failure of the wideband network 2, the remote control device 1 can remotely and continuously execute the control operation without missing the data between the remote control device 1 and the control device 3.

### (Second Embodiment)

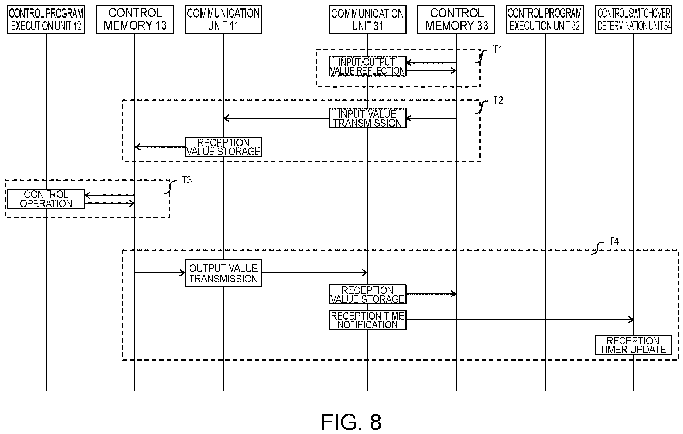

Figure 8 is a diagram illustrating an example of the normal process sequence between the remote control device and the control device in the second embodiment.

Since T1 to T3 are the same processes as those in the first embodiment, the description is omitted.

In T4, the communication unit 11 of the remote control device 1 reads the control operation result and the in-operation control information from the control memory 13 and transmits them to the control device 3 as the output values. The communication unit 31 of the control device 3 receives the control operation result and the in-operation control information and stores the values in the control memory 33 as the reception values. In addition, the communication unit 31 notifies the control switchover determination unit 34 of a reception time of the reception values. When the reception time is notified from the communication unit 31, the control switchover determination unit 34 updates a reception timer.

In the present embodiment, as compared to the first embodiment, the control switchover determination unit 34 is different in that it updates the reception timer based on the reception time of the reception values.

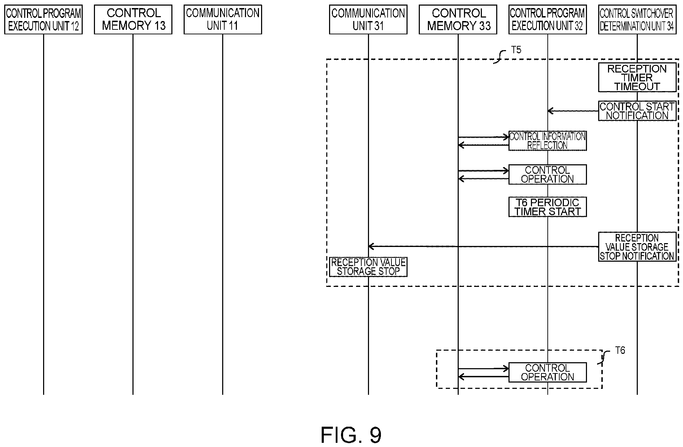

Figure 9 is a diagram illustrating an example of the process sequence when shifting the control between the remote control device and the control device in the second embodiment.

The process sequence in Figure 9 is a continuation of the process sequence described in Figure 8 and the process sequence is executed when a communication failure occurs in the wideband network 2 or the like.

T5 is a process of shifting the control program executing location from the remote control device 1 to the control device 3. The control switchover determination unit 34 monitors whether or not the control operation result and the in-operation control information have been received from the remote control device 1 by the reception timer. As described with the process sequence in Figure 8, the communication unit 31 receives the control operation result and the in-operation control information from the remote control device 1 and then notifies the control switchover determination unit 34 of the reception time (see T4). While the normal process sequence is being executed, the reception timer in the control switchover determination unit 34 updates the reception time every time the reception value is received in T4. If the reception time is not updated even when a certain time period elapses after the last updated reception time, a timeout occurs, and the control switchover determination unit 34 determines that the communication between the remote control device 1 and the control device 3 cannot be performed and starts the process sequence for shifting the control.

Here, the certain time period for the timeout is set as a value shorter than the periodic times t1 to t4 of T1 to T4. For example, if the periodic time t4 of T4 is one second, the certain time period may be 0.5 seconds which is half of it, and if the process when shifting the control needs 0.2 seconds, the certain time period may be set at 0.8 seconds.

Further, after the certain time period for the timeout is set, reception time notification in T4 needs to be executed in a shorter time than the certain time period for the timeout. Examples of the method include resetting the time t4 short and transmitting a communication packet for confirming existence in the periodic time different from output value transmission in T4. By resetting the time t4 short, the output value transmission in the remote control device 1 is executed in a shorter time than the certain time period for the timeout, and the reception time notification in the control device 3 can be executed before the timeout. In addition, in the communication packet for existence confirmation, by preparing another timer different from the output value transmission in T4 and transmitting the communication packet for confirming the existence in the periodic time different from the output value transmission, the reception time notification can be executed before the timeout. Since the communication packet for confirming the existence does not require the control operation result and the in-operation control information, communication loads can be reduced compared to the case of resetting the time t4 short.

T5 is a process of shifting the control operation from the remote control device 1 to the control device 3. If the timeout occurs in T5, the control switchover determination unit 34 performs the control start notification to the control program execution unit 32 of the control device 3 in order to start the process sequence for shifting the control. In addition, the control switchover determination unit 34 performs reception value storage stop notification for not storing the reception values from the remote control device 1 in the control memory 33 to the communication unit 31. While this process sequence illustrates an example in which the control start notification is notified first and the reception value storage stop notification is then notified, the order of the notification may be reversed.

The control program execution unit 32 which has received the control start notification performs the control information reflection, reads the in-operation control information from the control memory 33, and reflects it as the program internal information. After the reflection, the control program execution unit 32 reads the data of the sensor 4 from the control memory 33, executes the control operation, and stores the control operation result in the control memory 33. Thereafter, the control device 3 starts the T6 periodic timer in order to start T6 of periodically executing the control operation in the control device 3.

The communication unit 31 which has received the reception value storage stop notification in T5 does not store the reception values from the remote control device 1 after the reception value storage stop notification in the control memory 33 in order to avoid the confusion between the control operation result of the remote control device 1 that has arrived late and the result of the control operation executed in the control program execution unit 32.

After T5 is completed, the control device 3 may stop the execution of T2. In addition, the control program execution unit 12 of the remote control device 1 may update the reception timer when the reception value is stored (see T2), similarly to the control switchover determination unit 34 of the control device 3. Thus, the timeout occurs if the reception time is not updated after the certain time period elapses and the remote control device 1 may stop the execution of T3 and T4.

In T6, the control program execution unit 32 reads the data of the sensor 4 from the control memory 33 and executes the control operation. Further, the control program execution unit 32 stores the in-operation control information in the control memory 33 in addition to the control operation result.

The control device 3 periodically executes T1 and T6 according to the T1 periodic timer and the T6 periodic timer.

Further, after the restoration of the communication failure of the wideband network 2, similarly to the first embodiment, the control program executing location can be shifted from the control device 3 to the remote control device 1 by executing T7.

According to the present embodiment, the control device 3 updates the reception timer every time the control operation result or the like is received from the remote control device 1, and confirms soundness of the communication between the control device 3 and the remote control device 1. In addition, the control device 3 can continue the control operation even if the control operation result cannot be received from the remote control device 1 by switching the control program executing location from the remote control device 1 to the control device 3 based on the timeout of the reception timer.

In addition, according to the present embodiment, the remote control device 1 stores the in-operation control information in the control memory 13 and transmits it to the control device 3 via the communication unit 11. Further, the control device 3 receives the value from the remote control device 1 and stores it in the control memory 33. When starting the execution of the control program, the control device 3 can reflect the past data on the control operation by reading the value. Thus, even if the communication failure occurs in the wideband network 2, the control device 3 can continuously execute the control operation on the spot without missing the data between the remote control device 1 and the control device 3.

Further, according to the present embodiment, the control device 3 does not store the reception value from the remote control device 1 by reception value storage stop when executing the control operation in the control program execution unit 32. Thus, the confusion between the control operation result of the remote control device 1 that has arrived late and the result of the control operation executed in the control program execution unit 32 can be avoided.

### (Third Embodiment)

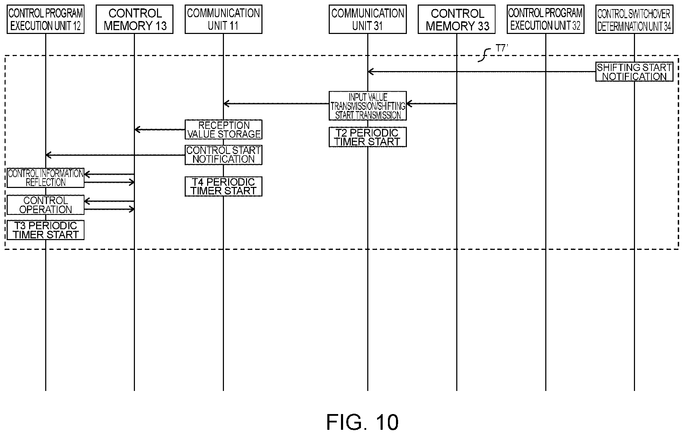

Figure 10 is a diagram illustrating an example of the process sequence when shifting the control between the remote control device and the control device in the third embodiment.

When the communication failure of the wideband network 2 is restored, in the case where the data of the sensor 4, the in-operation control information, and the shifting start notification transmitted from the control device 3 cannot be received in the remote control device 1, in the control system 100, the control operation is stopped in both of the remote control device 1 and the control device 3. Then, in the third embodiment, the control system 100 repeats the communication between the remote control device 1 and the control device 3 for a plurality of times, confirms that a communication situation of the wideband network 2 has become stable, and then stops the control operation in the control device 3.

In T7', some processes executed in T7 are not executed. Specifically, in T7', the control stop notification in the control switchover determination unit 34 and the reception value storage start in the communication unit 31 are not executed.

In the control switchover determination unit 34, since the control stop notification is not executed, the control program execution unit 32 continues to execute the control operation (T6). In addition, in T4, since the communication unit 31 does not execute the reception value storage start, the reception values received by the communication unit 31 are not stored in the control memory 33.

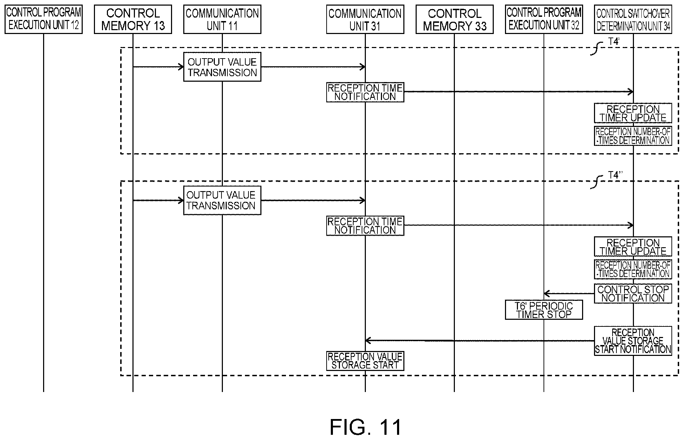

Figure 11 is a diagram illustrating an example of a process sequence when the control device starts storing the reception values in the third embodiment.

The communication unit 31 does not start storing of the reception values in T7', and executes reception number-of-times determination in the control switchover determination unit 34 in order to confirm stability of the communication situation of the wideband network 2. In the reception number-of-times determination, the control switchover determination unit 34 determines whether or not the number of times of receiving the output values, that is, the control operation result and the in-operation control information, transmitted by the communication unit 11 of the remote control device 1 within the certain time period in the communication unit 31 exceeds a threshold. Hereinafter, in the present embodiment, the control operation result and the in-operation control information received in the communication unit 31 are described as the reception values.

In Figure 11, the communication unit 31 notifies the control switchover determination unit 34 of the reception time of the reception values, and the control switchover determination unit 34 updates the reception timer based on the notification. In addition, the process sequence is such that the control switchover determination unit 34 determines the number of times of the reception every time of the number of times of updating the reception timer. When the reception timer is not updated as in Figure 7, the control device 3 may be configured such that the communication unit 31 transmits a signal indicating that the reception values have been received within the certain time period to the control switchover determination unit 34 and the control switchover determination unit 34 determines the number of times of the reception.

T4' is a process sequence when it is determined that the number of times of receiving the reception values has not exceeded the threshold as a result of determining the number of times of the reception, and T4" is a process sequence when it is determined that the number of times of receiving the reception values has exceeded the threshold as the result of determining the number of times of the reception. For both T4' and T4", an execution period is managed by the T4 periodic timer.

In T4", when it is determined that the number of times of receiving the reception values has exceeded the threshold, the control device 3 executes the control stop notification and the reception value storage start. In the control stop notification, the control switchover determination unit 34 notifies the control program execution unit 32, and the control switchover determination unit 34 stops a T6' periodic timer. In addition, the control switchover determination unit 34 performs reception value storage start notification to the communication unit 31, and the communication unit 31 executes a reception value storage process. After the reception value storage start process is executed, T4 is executed instead of the process T4".

As described above, the control system 100 can shift from the state where T1 and T6 are executed to the state where T1 to T4 and T6 are respectively independently and periodically executed by T7'. Further, for T4', if the number of times of receiving the reception values in the communication unit 31 exceeds the threshold, T4" is executed. Thus, since T6 is stopped and T4 is restarted, the control system 100 can shift to the state where T1 to T4 are respectively independently and periodically executed. That is, the control system 100 can restore the normal process sequence of executing the control operation in the remote control device 1.

The threshold may be determined as an arbitrary value by a user of the control system 100. Since the number of times of the reception number-of-times determination increases as the threshold increases, the control switchover determination unit 34 can determine that the communication situation of the wideband network 2 is stable.

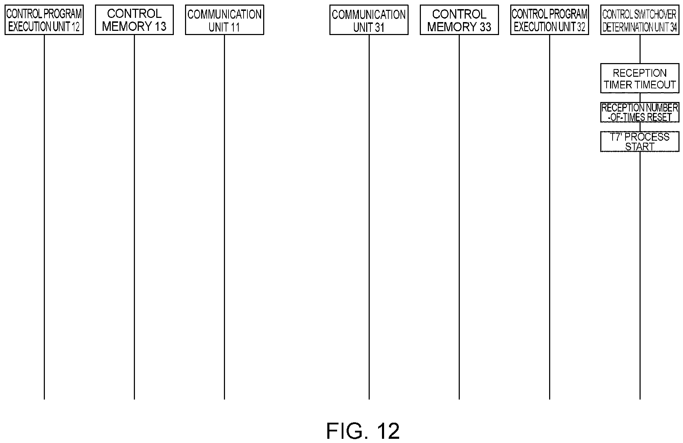

Figure 12 is a diagram illustrating another example of the process sequence when shifting the control between the remote control device and the control device in the third embodiment.

Figure 11 illustrates the example of the process sequence of determining the number of times of receiving the output values within the certain time period. Figure 12 illustrates an example of the process sequence when the reception timer times out.

The control switchover determination unit 34 determines whether or not the output values from the remote control device 1 have been stably received by the reception timer and the number of times of the reception. The reception timer in the control switchover determination unit 34 is updated every time the reception time notification is received in T4'. When the timeout occurs, the control switchover determination unit 34 resets the number of times of the reception and starts T7' again. Here, the T2 to T4 periodic timers started again in T7' are overwritten by the control switchover determination unit 34. Thus, even when the timeout occurs and T7' is executed again, since T6 is continuously executed, the control program is not stopped. Further, the control switchover determination unit 34 does not need to manage the plurality of timers by overwriting the periodic timers.

According to the present embodiment, the control device 3 stores the in-operation control information in the control memory 33 and transmits it to the remote control device 1 via the communication unit 31. The remote control device 1 receives the value from the control device 3 and stores it in the control memory 13. The remote control device 1 can reflect the past data on the control operation by reading the value when starting the execution of the control program. Thus, when the communication with the control device 3 is confirmed or when the control operation is remotely executed after the restoration of the communication failure of the wideband network 2, the remote control device 1 can remotely and continuously execute the control operation without missing the data between the remote control device 1 and the control device 3.

In addition, according to the present embodiment, the control system 100 repeats the communication between the remote control device 1 and the control device 3 for a plurality of times, confirms that a communication situation of the wideband network 2 has become stable, and then stops the control operation in the control device 3. Thus, the control system 100 can prevent the control operation from being stopped in both devices of the remote control device 1 and the control device 3.

Further, according to the present embodiment, when the reception timer times out, the control switchover determination unit 34 resets the number of times of the reception and counts the number of times of the reception again. Thus, the control system 100 can stop the control operation in the control device 3 after confirming that the communication situation of the wideband network 2 has become more stable, and can prevent the control operation from being stopped in both of the remote control device 1 and the control device 3.

### (Fourth Embodiment)

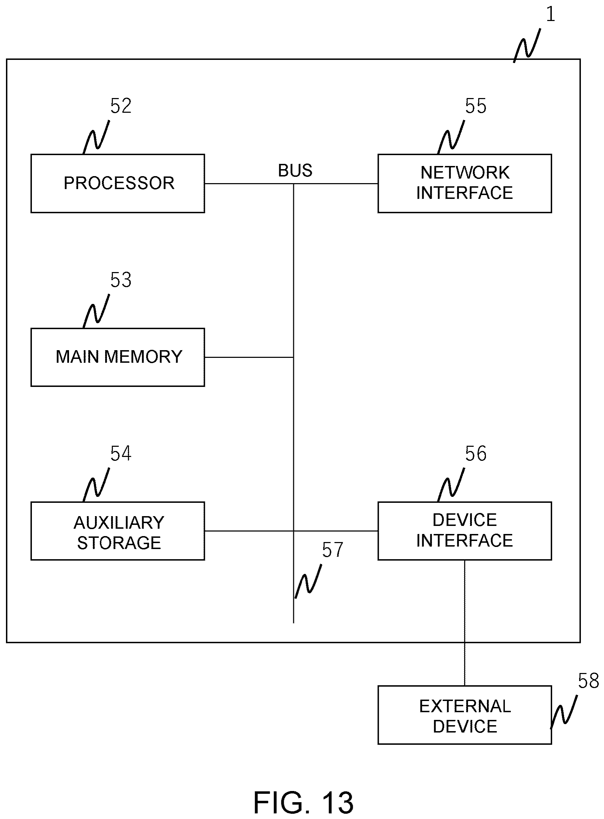

Figure 13 is a hardware configuration of the remote control device in the fourth embodiment.

The remote control device 1 in Figure 13 includes a processor 52 such as a CPU, a main memory 53 such as a RAM, an auxiliary storage 54 such as an HDD, a network interface 55 such as a LAN (Local Area Network) board, a device interface 56 such as a memory slot or a memory port, and a bus 57 configured to connect these devices with each other. The remote control device 1 is, for example, a computer such as a PC, and includes an input device such as a keyboard or a mouse, and an output device such as an LCD (Liquid Crystal Display) monitor.

In the present embodiment, a program for making the computer execute an information process of the remote control device 1 is installed inside the auxiliary storage 54. The remote control device 1 expands the program in the main memory 53 and executes it by the processor 52. Thus, the function of each block illustrated in Figure 2 is realized inside the remote control device 1 and process sequence shifting or the like described in the first embodiment is made possible. Note that the data generated by the information process is tentatively held in the main memory 53 or is stored and preserved in the auxiliary storage 54.

The program can be installed, for example, by mounting an external device 58 having the program recorded to a device interface 56 and storing the program in the auxiliary storage 54 from the external device 58. Examples of the external device 58 include a computer-readable recording medium and a recording device incorporating such a recording medium. Examples of the recording medium include a CD-ROM (Compact Disk Read Only Memory), a CD-R (Compact Disk Recordable), a flexible disk, a DVD-ROM (Digital Versatile Disk Read Only Memory), and a DVD-R (Digital Versatile Disk Recordable), and an example of the recording device is an HDD. In addition, the program can be installed by downloading the program via the network interface 55, for example.

According to the present embodiment, the function of the remote control device 1 in the first embodiment can be realized by software. Further, the control device 3 can be also realized by software.

While some embodiments have been described above, the embodiments have been presented by way of example only and are not intended to limit the scope of the invention. The novel remote control device 1 and control device 3 described in the present description can be implemented in various other forms. In addition, various omissions, substitutions, and changes can be made to the forms of the remote control device 1 and the control device 3 described in the present description without departing from the spirit of the invention. The appended claims and equivalents are intended to cover such forms and modifications as fall within the scope and spirit of the invention.

### [Reference Signs List]

1: remote control device, 2: wideband network, 3: control device, 4: sensor, 5: actuator, 11: communication unit, 12: control program execution unit, 13: control memory, 31: communication unit, 32: control program execution unit, 33: control memory, 34: control switchover determination unit, 40: HMI, 52: processor, 53: main memory, 54: auxiliary storage, 55: network interface, 56: device interface, 57: bus, 58: external device.

## Claims

1. A remote control device comprising:
a communication unit configured to receive shifting start notification regarding shifting of a control operation of a control target facility and reception values including data of a sensor of the control target facility and in-operation control information of the control operation from a control device that performs the control operation; and
a control program execution unit configured to execute a control program of the control operation based on the data of the sensor and the in-operation control information after the shifting start notification is received.

2. The remote control device according to claim 1, wherein
the control program execution unit reflects the in-operation control information as internal information of the control program and executes the control program using the data of the sensor.

3. A control device comprising:
a communication unit configured to receive reception values including a result of a control operation of a control target facility and in-operation control information of the control operation from a remote control device that remotely performs the control operation;
a control switchover determination unit configured to perform control start notification regarding start of a control program of the control operation when the reception values are not received within a certain time period; and
a control program execution unit configured to execute the control program based on the in-operation control information after the control start notification is received.

4. The control device according to claim 3, wherein
the control program execution unit reflects the in-operation control information as internal information of the control program and executes the control program using the data of a sensor of the control target facility.

5. The control device according to claim 3, wherein
the control switchover determination unit further performs reception value storage stop notification to stop storing of the reception values from the remote control device, and
the communication unit stops storing of the reception values after the reception value storage stop notification is received.

6. The control device according to claim 3, wherein
the control switchover determination unit further performs shifting start notification regarding shifting of the control operation, and performs control stop notification to stop control of the control device based on the number of times of receiving the reception values.
